# EUROPEAN PATENT SPECIFICATION

(11) **EP 2 297 570 B1**
(45) Date of publication and mention of the grant of the patent: **05.03.2014**
(21) Application number: 09770478.7
(22) Date of filing: 04.06.2009
(51) Int. Cl.: G01N 30/56, B01D 15/20

(54) **Separation media slurry tank**
Kessel für trennmedienaufschlämmungen
Cuve de suspension de milieu de séparation

(30) Priority: 27.06.2008 SE 0801526
(43) Date of publication of application: 23.03.2011
(73) Proprietor: GE Healthcare Bio-Sciences AB, 751 84 Uppsala (SE)
(72) Inventor: LÖNNQVIST, Tom, S-751 84 Uppsala (SE); NORDBERG, Roger, S-751 84 Uppsala (SE); LUNDKVIST, Joakim, S-751 84 Uppsala (SE)
(74) Representative: Aldenbäck, Ulla Christina
(86) International application number: PCT/SE2009/050665
(87) International publication number: WO 2009/157853

(56) References cited:
- WO-A1-2008/082339
- DE-A1- 10 137 613
- GB-A- 834 007
- JP-A- 4 323 557
- JP-A- 56 115 624
- US-A1- 2003 183 299
- GOPAL R. KASAT ET AL: "Review on Mixing Characteristics in Solid-Liquid and Solid-Liquid-Gas Reactor Vessels", THE CANADIAN JOURNAL OF CHEMICAL ENGINEERING, vol. 83, no. 4, 1 August 2005 (2005-08-01) , pages 618-643, XP55010315, ISSN: 0008-4034, DOI: 10.1002/cjce.5450830403

## Description

### TECHNICAL FIELD OF THE INVENTION

The present invention relates to a method and a tank for suspending separation media slurry according to the preambles of claim 1 and 6.

### BACKGROUND OF THE INVENTION

Separation media could be for example chromatography media and density gradient media. The media could be for example resins based on natural or synthetic polymer particles or inorganic material. For chromatography the separation media needs to be provided into a chromatography column. For the transportation of the separation media into for example a column the media needs first to be suspended into an homogenous media slurry mixture. The separation media is normally suspended with a liquid, for example water, buffer or a solvent. This suspended media is usually called media slurry. When a column should be filled with media slurry from one or more storage containers, an intermediate tank is used where the slurry is mixed into a homogenous mixture. The media slurry is often stirred manually in the tank and it is important that the media slurry becomes a homogenous mixture regarding the distribution of different sizes of particles in the media and regarding the mixing of particles and liquid. Of course it is not convenient to stir manually especially when there is a large amount of media slurry to be stirred. Manually stirring could also cause some sanitary issues. It could also take quite a long time to fill the column with the media slurry and the media slurry needs to be stirred the whole time. Another way to mix the slurry that is sometimes used is to shake or tilt the tank back and forth. This could be advantageous for small tanks and small volumes of slurry but is hard to perform and not suitable for big, heavy tanks.

Solutions have been proposed, for example in EP0515955 or JP4323557, where permanent, electrical stirrers, also called impellers are used. There are however different problems associated with these kind of impellers. If the impeller is not running the whole time when the media slurry is inside the tank the slurry will sediment and then it will be hard to start the impeller in the sedimented media. This requires furthermore an oversized engine. When starting the impeller in sedimented media the media particles can be damaged because of shear forces provided by the impeller. It could be preferable to not run the impeller the whole time in order to minimize possible damage to the particles caused by the impeller.

### SUMMARY

An object of the present invention is to provide an improved method and tank for suspending separation media slurry before transportation of said media slurry into for example a column where particles in said media not are damaged.

This is achieved in a method according to claim 1 and in a tank according to claim 6.

Hereby the impeller does not need to start in a thick, sedimented media with the risk of damaging particles in the media and the impeller does not need to be running the whole time when the separation media is inside the tank.

Further suitable embodiments are described in the dependent claims.

### BRIEF DESCRIPTION OF THE DRAWINGS

Figure 1 is a schematic view of a separation media slurry tank according to the invention.
Figure 2 is a flow chart describing the steps of the method.

### DETAILED DESCRIPTION OF EMBODIMENTS

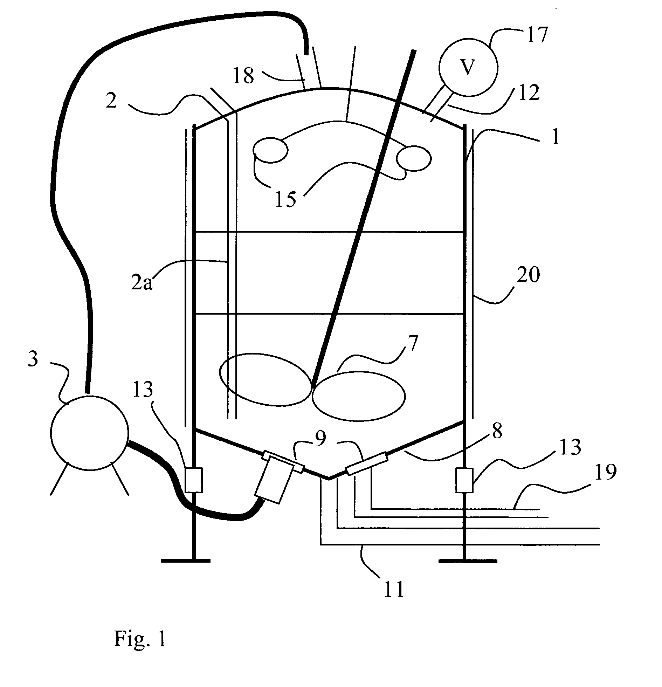

Figure 1 is a schematic view of a separation media slurry tank 1 according to the invention. If media is to be fed to a column from a media storage container the media is first transferred from the storage container(s) to a media tank according to the invention. This could be done by connecting a tube from the storage container to a pump connected to a media inlet 2 to the media slurry tank. Said media inlet 2 is suitably connected to a dip tube 2a provided pointing down into the tank with its lowest end relatively close to the bottom. Alternatively, the media tube 2 could be connected to a shorter type of dip tube which is pointing towards the wall of the tank in order to avoid splashing. Hereby the media slurry can be pumped from the media storage container to the tank. When the media has been transferred to the tank it immediately starts to sediment. An impeller 7 that is provided inside the tank can be started from the beginning and keep on stirring the media slurry the whole time until the media has been transferred to a column where it should be used for, for example chromatography, but according to the invention, as will be further described below, the impeller does not need to be ongoing the whole time. The impeller 7 is preferably designed as a coil in the height direction of the tank, this kind of impeller is also called a helical ribbon. Other designs such as a two- or three-bladed propeller or an impeller formed as an anchor are however also possible. In Figure 1 a two-bladed propeller 7 is shown. Furthermore the impeller is suitably provided with its lowest end close to the bottom 8 of the tank. Baffles are also suitably provided inside the tank in order to improve the stirring through increasing turbulence.

According to the invention at least one gas inlet 9 for compressed air or other clean, inert suitable gas, such as for example nitrogen, is provided at the bottom 8 of the tank, located on the lower part of the conical part of the tank close to the impeller. These gas inlets 9 can be provided as porous plates in order to increase the area. The gas inlets 9 are adapted to be attached to some kind of gas source, such as for example a compressor 3. The gas is proposed to be blown into the tank from the bottom when the slurry has sedimented to some degree. This has the advantage that the sedimented media in the tank will start to re-suspend. Preferably the impeller is not started until the sedimented media has been sufficiently re-suspended around the impeller by the introduction of gas from the gas inlet 9. Hereby it will be easier to start the impeller than it would have been if the impeller would have to start inside thick, sedimented media and the risk for damaging particles of the media is minimized.

When the media slurry has been stirred and mixed enough it can be transferred to a column through a pipe 11 from the bottom of the tank 1. However, according to the invention the aerated slurry needs to be degassed before transferring it to the column. This is because air can cause issues in the column. It can for example affect packing and sanitization of the column. Degassing the slurry can be done for example by connecting a vacuum pump 17 to the tank. This vacuum pump 17 can suitably be connected to a degassing inlet 12 in the upper part of the tank.

In one embodiment of the invention the tank can also be pressurized. This can suitably be achieved by connecting for example the compressor 3 to a pressurizing inlet 18 in the upper part of the tank. Pressurizing the tank makes it possible to speed up the transferring of the slurry to the column. The pressure in the tank can even be used for the packing of the media slurry in the column provided the applied tank pressure is suitable for packing the media of use.

By using some kind of valve the degassing inlet 12 and the pressurizing inlet 18 could be combined in one. I.e. the vacuum pump 17 and the compressor 3 can be alternatively connected through a valve to an inlet in the top of the tank. In this case the vacuum pump is preferably driven by the compressor.

The porous plates used for the gas inlets 9 can suitably be provided as filters. When pressurizing the tank these filters can also be used for pressing out liquid from the tank in order to change the media slurry concentration. A tube 19 then need to be connected to the filter plates 9. These filter plates can in one embodiment of the invention easily be exchanged. This is suitable because of sanitary reasons. When using different media there is a contamination risk. There can also be a risk for fuoling of the filters and therefore they may need to be exchanged. Load cells 13 can also be provided on the tank. The weight of the tank can then be monitored and thereby also the amount of liquid being pressed out through the filters and hereby also the change of slurry concentration. Furthermore the amount of slurry being moved to the column can be measured.

Furthermore, according to one embodiment of the invention spray balls 15 are provided in the tank. These are suitable for cleaning the tank with for example sodium hydroxide. They can also be used in order to be able to take all media particles out of the tank. It would also be possible to clean the tank by autoclaving since the tank can be pressurized. In this case the tank needs to have a mantel 20 and isolation.

The tank can be provided with wheels that can be locked.

The tank according to the invention can also be used when transferring media from a column to a storage container. It could be suitable to first transfer the media to the tank, suspend the media sufficiently according to what was previously described and then transfer the media slurry to the storage container. However, this tank can also suitable be used as a storage container.

Furthermore, according to one embodiment of the invention a sight glass is provided in the manhole cover. This will simplify the judgement of when the degassing is sufficient, if foam is generated, that no vortex occur during emptying of tank and also for cleaning inspection. Hereby inspection can be performed without opening the tank and thereby the risk for contamination of the media.

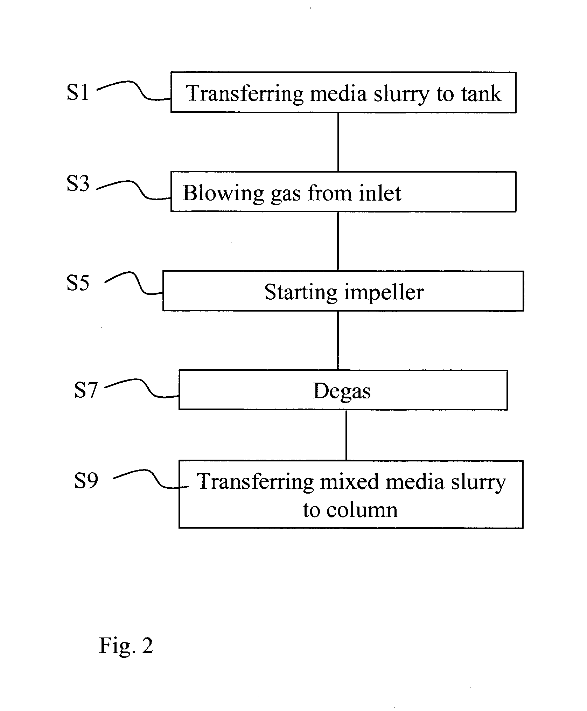

The method according to one embodiment of the invention where media slurry is transferred from a storage container to a column via the tank will now be further described with reference to the flowchart in Figure 2. The steps are described in order below.

S 1: Media slurry is first transferred from the storage container to the tank according to the invention. This could be done by using a pump and a tube or pipe. As soon as the media slurry has entered the tank it starts to sediment, i.e. media will sediment at the bottom 8 of the tank.

The method steps S3-S9 need not to be performed immediately after transferring of the media slurry to the tank. But when it is time for the transferring of the media slurry to the column the media slurry needs to be mixed into homogenous media slurry and then the steps S3-S9 will be performed.

S3: Blowing gas into the tank from the bottom of the tank (through the gas inlets 9). Hereby the sedimented media bed at the bottom of the tank will start to loosen up.

S5: When the sedimented media close to the bottom 8 of the tank has been sufficiently re-suspended the impeller 7 is started. The impeller 7 is driven until a homogenous mixture of the media slurry is achieved.

S7: In one embodiment of the invention an underpressure is provided in the tank in order to degas the slurry.

S9: When the media slurry is sufficiently mixed and it has been degassed it is transferred to the column. Suitably this transferring is assisted by pressurizing the tank. Alternatively a pump is provided in between the tank and the column.

If the method according to the invention should be applied for the invert transferring of media slurry, i.e. from column to storage container the same steps S1-S9 are followed with the only change that the storage container replaces the column and the column replaces the storage container.

## Claims

1. A method for handling separation media slurry in a tank, before transferring the separation media slurry to a column or a container, **characterised by** the steps of:
- blowing gas from the bottom of the tank into the sedimented media in the tank and thereby the sedimented media starts to re-suspend;
- starting an impeller (7) provided in the tank in order to stir said media slurry that already has started to re-suspend;
- pumping gas out of the tank in order to degas the media slurry before transferring the media slurry to a column or a container; and
- transferring the separation media slurry to a column or a container.

2. A method according to claim 1, **characterised by** pumping gas out of the tank during the stirring in order to degas the media slurry.

3. A method according to claim 1 or 2, **characterised by** pressurizing the tank in order to transfer the media slurry from the tank to a column when the media slurry has been sufficiently stirred.

4. A method according to claim 3, **characterised by** packing the media slurry in the column by using said pressure in the tank.

5. A method according to claim 3, **characterised by** forcing liquid out through filter plates in the bottom of the tank by using the pressure in the tank in order to change the media slurry concentration.

6. A tank adapted to be used for suspending separation media slurry before transferring the separation media slurry to a column or a container, said tank comprising:
- an impeller (7) adapted to rotate in order to mix the media slurry,
**characterised in that** said tank further comprises
- at least one gas inlet (9) provided in the bottom part (8) of the tank, and **in that** said gas inlet is provided in order to make it possible to blow in gas into the somewhat sedimented media slurry in order to start re-suspend media that has sedimented in the tank before the impeller is started;
- means (12, 17) for applying underpressure in the tank in order to degas the media slurry; and
- a pipe (11) for transferring the separation media slurry to a column or a container.

7. A tank according to claim 6, **characterised in that** it further comprises means (18, 3) for applying a pressure in the tank in order to transfer the media slurry from the tank to a column when the media slurry has been sufficiently stirred.

8. A tank according to any one of the claims 6-7, **characterised in that** it further comprises at least one filter plate at the bottom of the tank through which the gas should be blown in and through which liquid optionally can be forced out by pressure applied in the tank in order to change the media slurry concentration.

9. A tank according to any one of the claims 6-8, **characterised in that** the tank is provided with at least one load cell 13.

10. A tank according to any one of the claims 6-9, **characterised in that** the impeller (7) is designed as a coil in the height direction of the tank.

## Patentansprüche

1. Verfahren zur Handhabung einer Trennmediumaufschlämmung in einem Tank vor der Übertragung der Trennmediumaufschlämmung an eine Säule oder einen Behälter, **gekennzeichnet durch** die Schritte:
- Einblasen von Gas vom Boden des Tanks in das sedimentierte Medium in dem Tank, so dass **dadurch** das sedimentierte Medium beginnt, sich zu resuspendieren;
- Starten eines in dem Tank vorgesehenen Impellers (7), um die Mediumaufschlämmung zu rühren, die bereits begonnen hat, sich zu resuspendieren;
- Pumpen von Gas aus dem Tank, um die Mediumaufschlämmung zu entgasen, bevor die Mediumaufschlämmung an eine Säule oder einen Behälter übertragen wird; und
- Übertragen der Trennmediumaufschlämmung an eine Säule oder einen Behälter.

2. Verfahren nach Anspruch 1, **gekennzeichnet durch** das Pumpen von Gas aus dem Tank während des Rührens, um die Mediumaufschlämmung zu entgasen.

3. Verfahren nach Anspruch 1 oder 2, **gekennzeichnet durch** die Druckbeaufschlagung des Tanks, um die Mediumaufschlämmung aus dem Tank an eine Säule zu übertragen, nachdem die Mediumaufschlämmung ausreichend gerührt wurde.

4. Verfahren nach Anspruch 3, **gekennzeichnet durch** das Packen der Mediumaufschlämmung in die Säule unter Verwendung des Drucks in dem Tank.

5. Verfahren nach Anspruch 3, **gekennzeichnet durch** Austreiben von Flüssigkeit durch Filterplatten im Boden des Tanks unter Verwendung des Drucks in dem Tank, um die Konzentration der Mediumaufschlämmung zu verändern.

6. Tank, der dafür ausgelegt ist, zum Suspendieren der Trennmediumaufschlämmung vor der Übertragung der Trennmediumaufschlämmung an eine Säule oder einen Behälter verwendet zu werden, wobei der Tank Folgendes enthält:
- einen Impeller (7), der drehbar ausgelegt ist, um die Mediumaufschlämmung zu mischen,
**dadurch gekennzeichnet, dass** der Tank ferner Folgendes enthält:
- mindestens einen Gaseinlass (9), der in dem Bodenteil (8) des Tanks vorgesehen ist, und wobei der Gaseinlass vorgesehen ist, um das Einblasen von Gas in die etwas sedimentierte Mediumaufschlämmung zu ermöglichen, um die Resuspendierung des Mediums zu beginnen, das in dem Tank sedimentiert ist, bevor der Impeller gestartet wird;
- Mittel (12, 17) zur Beaufschlagung des Tanks mit Unterdruck, um die Mediumaufschlämmung zu entgasen; und
- eine Rohrleitung (11) zum Übertragen der Trennmediumaufschlämmung an eine Säule oder einen Behälter.

7. Tank nach Anspruch 6, **dadurch gekennzeichnet, dass** er ferner Mittel (18, 3) zum Beaufschlagen des Tanks mit Druck aufweist, um die Mediumaufschlämmung aus dem Tank an eine Säule zu übertragen, wenn die Mediumaufschlämmung ausreichend gerührt wurde.

8. Tank nach einem der Ansprüche 6-7, **dadurch gekennzeichnet, dass** er ferner mindestens eine Filterplatte am Boden des Tanks aufweist, durch welche das Gas eingeblasen werden sollte und durch welche durch Beaufschlagung des Tanks mit Druck optional Flüssigkeit ausgetrieben werden kann, um die Konzentration der Mediumaufschlämmung zu verändern.

9. Tank nach einem der Ansprüche 6-8, **dadurch gekennzeichnet, dass** der Tank mit mindestens einer Messdose (13) versehen ist.

10. Tank nach einem der Ansprüche 6-9, **dadurch gekennzeichnet, dass** der Impeller (7) als eine Wendel in Höhenrichtung des Tanks konstruiert ist.

## Revendications

1. Procédé de manipulation d'une suspension de milieu de séparation dans un réservoir avant de la transférer à une colonne ou un contenant, **caractérisé en ce qu**'il comprend les étapes qui consistent à :
- insuffler du gaz depuis le fond du réservoir dans le milieu sédimenté dans le réservoir et par là même le milieu sédimenté commence sa resuspension ;
- démarrer un agitateur (7) prévu dans le réservoir pour remuer ladite suspension de milieu qui a déjà commencé sa resuspension ;
- pomper du gaz hors du réservoir afin de dégazer la suspension de milieu avant de la transférer à une colonne ou un contenant ; et
- transférer la suspension de milieu de séparation à une colonne ou un contenant.

2. Procédé selon la revendication 1, **caractérisé en ce que** le gaz est pompé hors du réservoir pendant le remuage afin de dégazer la suspension de milieu.

3. Procédé selon la revendication 1 ou 2, **caractérisé en ce que** le réservoir est pressurisé afin de transférer la suspension de milieu du réservoir à une colonne lorsque celle-ci a été suffisamment remuée.

4. Procédé selon la revendication 3, **caractérisé en ce que** la suspension de milieu est chargée dans la colonne en utilisant ladite pression dans le réservoir.

5. Procédé selon la revendication 3, **caractérisé en ce que** le liquide sort de force par les plaques de filtration dans le fond du réservoir en utilisant la pression dans le réservoir afin de modifier la concentration de la suspension de milieu.

6. Réservoir adapté pour être utilisé pour suspendre la suspension de milieu de séparation avant de la transférer à une colonne ou un contenant, ledit réservoir comprenant :
- un agitateur (7) adapté pour tourner afin de mélanger la suspension de milieu, **caractérisé en ce que** ledit réservoir comprend, en outre,
- au moins une entrée de gaz (9) prévue dans la partie inférieure (8) du réservoir et **en ce que** ladite entrée de gaz est prévue pour rendre possible l'insufflation du gaz dans la suspension de milieu quelque peu sédimenté afin de démarrer la resuspension du milieu qui a sédimenté dans le réservoir avant le démarrage de l'agitateur ;
- des moyens (12, 17) pour appliquer une dépression dans le réservoir afin de dégazer la suspension de milieu ; et
- un tuyau (11) pour transférer la suspension de milieu de séparation à une colonne ou un contenant.

7. Réservoir selon la revendication 6, **caractérisé en ce qu'**il comprend, en outre, des moyens (18, 3) pour appliquer une pression dans le réservoir afin de transférer la suspension de milieu du réservoir à une colonne lorsque la suspension de milieu a été suffisamment remuée.

8. Réservoir selon l'une quelconque des revendications 6 à 7, **caractérisé en ce qu'il** comprend, en outre, au moins une plaque de filtration sur le fond du réservoir, par laquelle le gaz devrait être insufflé et par laquelle du liquide peut être éventuellement forcé à sortir par la pression appliquée dans le réservoir afin de modifier la concentration de la suspension de milieu.

9. Réservoir selon l'une quelconque des revendications 6 à 8, **caractérisé en ce que** le réservoir est doté d'au moins un capteur dynamométrique (13).

10. Réservoir selon l'une quelconque des revendications 6 à 9, **caractérisé en ce que** l'agitateur (7) est conçu comme une bobine dans le sens vertical du réservoir.
